# EUROPÄISCHE PATENTSCHRIFT

(11) **EP 2 944 169 B1**
(45) Veröffentlichungstag und Bekanntmachung des Hinweises auf die Patenterteilung: **17.10.2018**
(21) Anmeldenummer: 15401039.1
(22) Anmeldetag: 05.05.2015
(51) Int. Cl.: A01B 61/04

(54) **DREHPFLUG**
REVERSIBLE PLOUGH
CHARRUE BRABANT

(30) Priorität: 14.05.2014 DE 102014106758
(43) Veröffentlichungstag der Anmeldung: 18.11.2015
(73) Patentinhaber: Amazonen-Werke H. Dreyer GmbH & Co. KG, 49205 Hasbergen (DE)
(72) Erfinder: Resch, Rainer, 49170 Hagen a TW (DE); Laumann, Bernhard, 48477 Hörstel - Riesenbeck (DE)

(56) Entgegenhaltungen:
- DE-A1- 4 218 750
- DE-U1- 9 002 734

## Beschreibung

Die Erfindung bezieht sich auf einen Drehpflug mit einem an einem Anbaubock zur Verbindung des Drehpfluges mit einem landwirtschaftlichen Zugfahrzeug dreh- und oder schwenkbar befestigbaren Pflugrahmen und mit auf gegenüberliegenden Seiten des Pflugrahmens angeordneten Pflugscharreihen mit Pflugkörpern, wobei durch eine über eine Antriebsvorrichtung eingeleitete Drehbewegung des Pflugrahmens wahlweise die eine oder die andere Pflugscharreihe in ihre Betriebsstellung oder in ihre Außerbetriebstellung überführbar ist und wobei jeder Pflugkörper gegen die Kraft eines Spannkrafterzeugers als Überlastsicherungselement schwenkbar an dem Pflugrahmen abgestützt ist.

Drehpflüge mit an gegenüberliegenden Seiten eines Pflugrahmens angeordneten Pflugscharreihen haben Pflugscharreihen, die auf der einen Seite rechts wendende und auf der anderen Seite links wendende Pflugkörper aufweisen, die jeweils wechselseitig bei einer Hinfahrt und bei einer Rückfahrt zum Einsatz kommen. Durch eine Antriebsvorrichtung, beispielsweise in Gestalt eines Drehzylinders ist der Pflug in die jeweilige Arbeitsstellung zu überführen. Für eine Arbeitsbreiteneinstellung kann darüber hinaus der Drehpflug mit einer besonderen Vorrichtung ausgerüstet sein, um in der jeweiligen Arbeitsstellung die Pflugarbeitsbreite anpassen zu können.

Darüber hinaus können Drehpflüge mit einer Überlastsicherung ausgerüstet sein, um zum Beispiel beim Auftreffen des Pflugkörpers auf einen Stein ein Ausweichen des Pflugkörpers dem Stein zu ermöglichen. Dazu kann der Pflugkörper an einem Grindel oder einem sonstigen Halteteil schwenkbar oder sonstwie ausweichbar befestigt sein und kann gegen die Kraft eines Überlastsicherungselementes, beispielsweise gegen die Kraft eines Hydraulikzylinders oder eines Federelementes, verschwenken.

Ein Drehpflug mit einer Überlastsicherung der eingangs genannten Art ist aus der DE 4218750 A1 bekannt. Dieser Drehpflug weist mehrere in Arbeitsfahrtrichtung hintereinander angeordnete Pflugkörper auf, die jeweils an einem Halterahmen befestigt sind, die jeweils schwenkbar an einem Grindel, der seinerseits am Pflugrahmen abgestützt ist, verschwenkbar sind. An dem Halterahmen greift die Kolbenstange eines Hydraulikzylinders an, so dass der Pflugkörper gegen die Kraft des Hydraulikzylinders als Überlastsicherungselement gegenüber dem Pflugrahmen verschwenkt werden kann, zum Beispiel beim Auftreffen auf einen Stein. Die jeweiligen Hydraulikzylinder der einzelnen Pflugkörper sind von einem zentralen Druckspeicher mit einem Hydraulikmedium zu versehen, so dass an der wirksamen, mit dem Hydraulikmedium beaufschlagbaren Kolbenfläche des jeweiligen Hydraulikzylinders der einzelnen Pflugkörper ein identischer Druck vorliegt. Die einzelnen Pflugkörper treffen jedoch bei ihrem Arbeitseinsatz auf unterschiedliche Bodenverhältnisse, so dass es während des Arbeitseinsatzes dazu kommen kann, dass einzelne Pflugkörper gegen die Kraft des Ihnen zugeordneten Hydraulikzylinders aufgrund des dort vorherrschenden Druckes und aufgrund der individuell vorherrschenden Bodenverhältnisse ausweichen, andere jedoch nicht, obgleich ein Hindernis bei dem verschwenkten Pflugkörper nicht vorgelegen hat. Dies kann zu unbefriedigenden Pflugergebnissen führen.

Es ist Aufgabe der vorliegenden Erfindung, einen Drehpflug der eingangs genannten Art derart weiterzubilden, dass im Betrieb vorhersehbare unterschiedliche Bodenverhältnisse verbessert zu berücksichtigen sind.

Zur Lösung dieser Aufgabe zeichnet sich der Drehpflug der eingangs genannten Art dadurch aus, dass der Spannkrafterzeuger als Überlastsicherungselement zumindest des in Arbeitsfahrtrichtung des Drehpfluges ersten Pflugkörpers auf die Erzeugung einer größeren Spannkraft ausgelegt ist als der Spannkrafterzeuger des in Arbeitsfahrtrichtung des Drehpfluges letzten Pflugkörpers.

Damit ist ein Drehpflug zur Verfügung gestellt, bei dem der Spannkrafterzeuger des ersten Pflugkörpers eine größere Spannkraft und damit eine größere Haltekraft erzeugt als ein anderer Spannkrafterzeuger z.B. eines direkt nachgeordneten Pflugkörpers und des Spannkrafterzeugers des letzten Pflugkörpers des Drehpfluges. Daraus resultiert eine größere Kraft, die der erste Pflugkörper überwinden muss, um ausgelenkt bzw. weggeschwenkt werden zu können. Da der erste Pflugkörper, der während der Arbeitsfahrt direkt neben einer Schlepperspur angeordnet ist, einen höher verdichteten Boden zu bearbeiten hat als zum Beispiel der letzte Pflugkörper des Drehpfluges, besteht gegenüber einer gleichen Spannkraft, die Spannkrafterzeuger als Überlastsicherungselemente aller Pflugkörper erzeugen, nicht mehr das Risiko, dass der erste Pflugkörper aufgrund der Bodenverhältnisse schneller auszuweichen als andere Pflugkörper, die nicht solchen höher verdichteten Bodenverhältnissen ausgesetzt sind. Ein erster Pflugkörper hat darüber hinaus auch in aller Regel eine größere Schnittbreite und arbeitet an einer Furchenwand, so dass dies die Belastung des ersten Pflugkörpers weiter erhöht.

Bevorzugterweise haben auch der in Arbeitsfahrtrichtung dritte, vorzugsweise auch der in Arbeitsfahrtrichtung vierte Pflugköper jeweils einen Spannkrafterzeuger mit jeweils einer größeren Spannkraft. Dies insbesondere auch deshalb, da auch der dritte, gegebenenfalls auch der vierte Pflugkörper hinter einem Schlepperrad während der Arbeitsfahrt arbeiten müssen, so dass hier ebenfalls höher verdichtete Bodenbereiche zu bearbeiten sind.

Die Spannkrafterzeuger können Druckfedern oder auch Zugfedern sein, die werkseitig auf die Erzeugung gewünschter Spannkräfte ausgelegt sind. Auch Hydraulikzylinder können zum Einsatz kommen.

Bevorzugterweise handelt es sich bei dem Drehpflug um einen Pflug mit während der Arbeitsfahrt sechs hintereinander angeordneten Pflugkörpern, die von einem zentralen Hydraulikmediumspeicher versorgte Hydraulikzylinder als Überlastsicherungselemente aufweisen. Um unterschiedlichen Bodenverhältnissen insgesamt genüge tun zu können, kann der Druck im Druckspeicher für alle Pflugkörper einstellbar sein, wobei aufgrund der größeren wirksamen Kolbenfläche am Hydraulikzylinder des ersten Pflugkörpers, gegebenenfalls auch an den Hydraulikzylindern des dritten und vierten Pflugkörpers automatisch auch bei einem höher eingestellten Druck aufgrund der größeren wirksamen Kolbenflächen die größere Haltekraft am ersten bzw. dritten und vierten Pflugkörper erhalten bleiben. Alternativ ist es selbstverständlich auch möglich, die Hydraulikzylinder der einzelnen Pflugkörper als Überlastsicherungselemente mit einem eigenen autarken System mit eigenem Druckspeicher auszubilden.

Weitere vorteilhafte Ausgestaltungen ergeben sich aus weiteren Unteransprüchen, der nachfolgenden Beschreibung und der Zeichnung.

Die Zeichnungen zeigen:
- Fig. 1: in einer perspektivischen Ansicht schräg von oben ein Ausführungsbeispiel des Drehpfluges nach der Erfindung während einer Arbeitsfahrt;

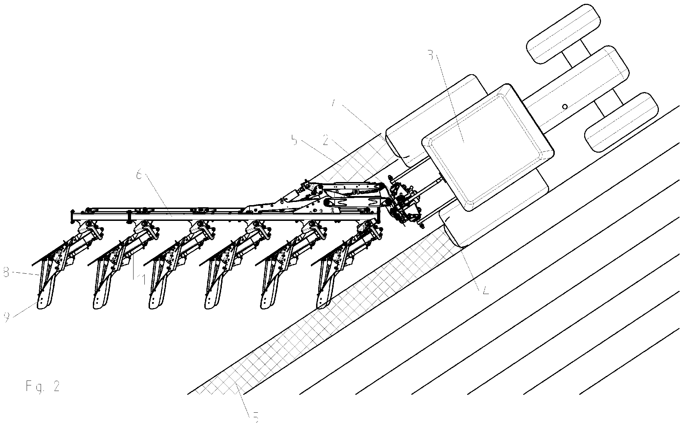

- Fig. 2: eine Ansicht von oben auf das Ausführungsbeispiel nach Figur 1 während der Arbeitsfahrt;

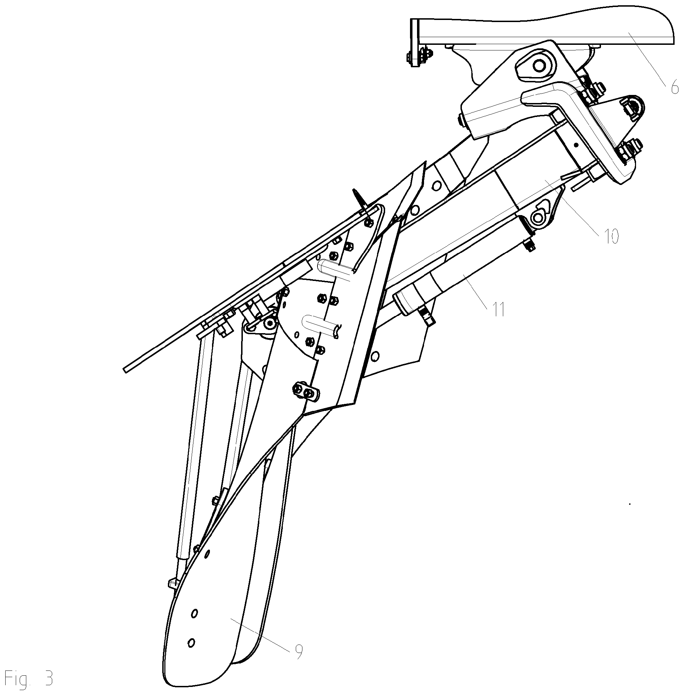

- Fig. 3: eine Seitendarstellung auf einen Pflugkörper mit einem Hydraulikzylinder als Überlastsicherungselement, und

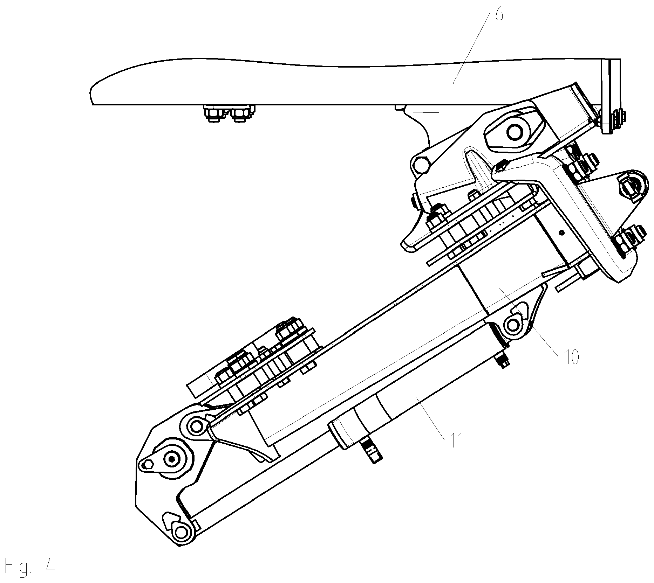

- Fig. 4: eine zu Figur 3 analoge Darstellung der Teile ohne Darstellung des Pflugkörpers.

In der Zeichnung sind grundsätzlich übereinstimmende Teile mit übereinstimmenden Bezugsziffern.

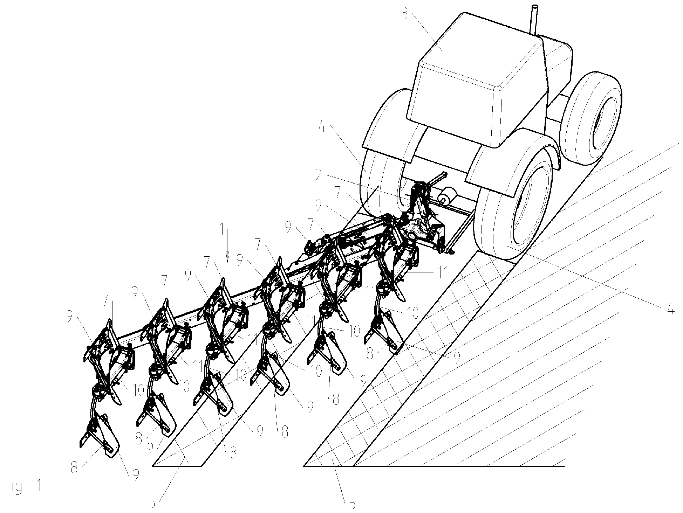

In Figur 1 ist ein allgemein mit 1 bezifferter Drehpflug während der Arbeitsfahrt gezeigt, der über einen Anbaubock 2 an einen Schlepper 3 angehängt ist und von diesem während der Arbeitsfahrt gezogen wird. Der Schlepper 3 hat Schlepperräder 4, die Schlepperspuren 5 erzeugen. Der Pflugrahmen 6 trägt Pflugscharrreihen 7 und 8 mit insgesamt in jeder Pflugscharrreihe 7 bzw. 8 sechs Pflugkörpern 9, die über Haltearme 10 gegen die Kraft von Hydraulikzylindern 11 am Pflugrahmen 6 abgestützt sind.

Im Einzelnen nicht derart dargestellt sind die Pflugkörper 6 gegen die Kraft der Hydraulikzylinder 11 am Pflugrahmen 6 abgestützt über entsprechende Halteteile, Grindel und dergleichen und sind um eine zum Beispiel quer zur Arbeitsfahrtrichtung gelegene Achse schwenkbar, wenn die entsprechende Haltekraft zum Beispiel bei einem Auftreffen des Pflugkörpers 9 auf ein Hindernis, zum Beispiel auf einen Stein, überwunden wird. Die Ausweichbewegung kann nach oben, kann seitwärts zur Arbeitsfahrtrichtung, kann aber auch in eine Richtung im dreidimensionalen Raum erfolgen. Entscheidend ist, dass die wirksame Kolbenfläche des Hydraulikzylinders des ersten in Arbeitsfahrtrichtung ersten Pflugkörpers 9, das heißt des Pflugkörpers 9, der dem Schlepper 3 unmittelbar nachgeordnet ist, größer ist, so dass dort eine größere Haltekraft wirkt, die der Pflugkörper 9 überwinden muss, um eine Ausweich- bzw. Wegschwenkbewegung durchführen zu können. Dies insbesondere deshalb, da dieser erste in Arbeitsfahrtrichtung erste Pflugkörper 9 aufgrund der rechten Schlepperspur und der dort befindlichen Furchenwand höher verdichtete Bodenbereiche zu bearbeiten hat als beispielsweise der ihm nachgeordnete zweite Pflugkörper, insbesondere aber auch der letzte Pflugkörper 9. Auch der in Arbeitsfahrtrichtung dritte und vierte Pflugkörper 9 arbeitet jeweils in einem Bereich, in dem das linke Schlepperrad 4 in der Zeichnung eine Schlepperspur 5 hinterlassen hat, also in einem Bereich höher verdichteten Bodens, so dass deren wirksamen, von dem Hydraulikmedium beaufschlagbaren Kolbenflächen größer ausgebildet sind. Dies führt zu einem vergleichmäßigten Pflugkörpereinsatz und damit einem verbesserten Arbeitsergebnis. Gleichwohl ist die Überlast- und damit auch die Steinsicherung bei allen Pflugkörpern weiterhin gewährleistet.

Die Hydraulikzylinder 11 können von einem zentralen Speicher mit dem Hydraulikmedium versorgt werden, so dass bei allen Hydraulikzylindern 11 übereinstimmende Druckverhältnisse vorliegen, jedoch bei den Hydraulikzylindern 11 mit der größeren wirksamen Kolbenflächen eine erhöhte Haltekraft erzeugt wird.

Alternativ können auch Druckfedern, Zugfedern oder sonstige Spannkrafterzeuger zum Einsatz kommen.

## Patentansprüche

1. Drehpflug (1) mit einem an einem Anbaubock (2) zur Verbindung des Drehpfluges (1) mit einem landwirtschaftlichen Zugfahrzeug (3) dreh- und/oder schwenkbar befestigbaren Pflugrahmen (6) und mit auf gegenüberliegenden Seiten des Pflugrahmens (6) angeordneten Pflugscharrreihen (8, 9) mit Pflugkörpern, wobei durch eine über eine Antriebsvorrichtung eingeleitete Drehbewegung des Pflugrahmens (6) wahlweise die eine oder die andere Pflugscharrreihe (8, 9) in ihre Betriebsstellung oder in ihre Außerbetriebstellung überführbar ist und wobei jeder Pflugkörper (9) gegen die Kraft eines Spannkrafterzeugers (11) als Überlastsicherungselement schwenkbar an dem Pflugrahmen (6) abgestützt ist, **dadurch gekennzeichnet, dass** der Spannkrafterzeuger als Überlastsicherungselement zumindest des in Arbeitsfahrtrichtung des Drehpfluges (1) ersten Pflugkörpers (9) eine größere Spannkraft als der Spannkrafterzeuger des in Arbeitsfahrtrichtung des Drehpfluges (1) letzten Pflugkörpers (9) aufweist.

2. Drehpflug (1) nach Anspruch 1, **dadurch gekennzeichnet, dass** der Spannkrafterzeuger als Überlastsicherungselement des in Arbeitsfahrtrichtung des Drehpfluges (1) dritten Pflugkörpers (9) eine größere Spannkraft ausgelegt ist als der Spannkrafterzeuger des in Arbeitsfahrtrichtung letzten Pflugkörpers (1) aufweist.

3. Drehpflug (1) nach Anspruch 1 oder 2, **dadurch gekennzeichnet, dass** der Spannkrafterzeuger als Überlastsicherungselement des in Arbeitsfahrtrichtung vierten Pflugkörpers (9) eine größere Spannkraft als der Spannkrafterzeuger des in Arbeitsfahrtrichtung letzten Pflugkörpers (9) aufweist.

4. Drehpflug (1) nach einem der Ansprüche 1 bis 3, **dadurch gekennzeichnet**, die Spannkrafterzeuger als Überlastsicherungselemente als Druckfedern ausgebildet sind.

5. Drehpflug (1) nach einem der Ansprüche 1 bis 3, **dadurch gekennzeichnet, dass** die Spannkrafterzeuger der Pflugkörper als Zugfedern ausgebildet sind.

6. Drehpflug (1) nach einem der Ansprüche 1 bis 3, **dadurch gekennzeichnet, dass** die Spannkrafterzeuger der Pflugkörper (9) als Hydraulikzylinder (11) ausgebildet sind.

## Claims

1. Reversible plough (1) with a plough frame (6) which is fastenable rotatably and/or pivotably to a headstock (2) for connecting the reversible plough (1) to an agricultural tractor (3), and with rows of ploughshares (8, 9) which are arranged on opposite sides of the plough frame (6) and have plough bodies, wherein, by means of a rotational movement of the plough frame (6) initiated via a driving device, either the one or the other row of ploughshares (8, 9) is transferable into the operating position or into the non-operating position thereof, and wherein each plough body (9) is supported on the plough frame (6) so as to be pivotable counter to the force of a tension-force generator (11) as an overload protection element, **characterized in that** the tension-force generator as an overload protection element of at least the first plough body (9) in the working direction of travel of the reversible plough (1) has a greater tension force than the tension-force generator of the final plough body (9) in the working direction of travel of the reversible plough (1).

2. Reversible plough (1) according to Claim 1, **characterized in that** the tension-force generator as an overload protection element of the third plough body (9) in the working direction of travel of the reversible plough (1) is configured as a greater tension force than the tension-force generator of the final plough body (1) in the working direction of travel.

3. Reversible plough (1) according to Claim 1 or 2, **characterized in that** the tension-force generator as an overload protection element of the fourth plough body (9) in the working direction of travel has a greater tension force than the tension-force generator of the final plough body (9) in the working direction of travel.

4. Reversible plough (1) according to one of Claims 1 to 3, **characterized in that** the tension-force generators as overload protection elements are in the form of compression springs.

5. Reversible plough (1) according to one of Claims 1 to 3, **characterized in that** the tension-force generators of the plough bodies are in the form of tension springs.

6. Reversible plough (1) according to one of Claims 1 to 3, **characterized in that** the tension-force generators of the plough bodies (9) are in the form of hydraulic cylinders (11).

## Revendications

1. Charrue brabant (1) présentant
un bâti de charrue (6) apte à être fixé à rotation et/ou à pivotement sur un chevalet de montage (2) assurant la liaison de la charrue brabant (1) avec un véhicule agricole tracteur (3) et
des rangées de socs de charrue (8, 9) disposées sur des côtés opposés du bâti de charrue (6) et dotées de corps de charrue,
un déplacement de rotation du bâti de charrue (6) introduit par l'intermédiaire d'un ensemble d'entraînement permettant d'amener l'une ou l'autre des rangées de socs de charrue (8, 9) dans sa position de fonctionnement ou dans sa position de non fonctionnement, chaque soc de charrue (9) étant soutenu à pivotement sur le bâti de charrue (6) en opposition à la force générateur (11) de force de serrage qui sert d'élément de protection contre les surcharges, **caractérisée en ce que**
le générateur de force de serrage servant d'élément de protection contre les surcharges pour au moins le corps de charrue (9) situé en première position dans la direction de déplacement de travail de la charrue brabant (1) présente une force de serrage plus élevée que le générateur de force de serrage du corps de charrue (9) situé en dernière position dans la direction de déplacement de travail de la charrue brabant (1).

2. Charrue brabant (1) selon la revendication 1, **caractérisée en ce que** le générateur de force de serrage servant d'élément de protection contre les surcharges pour le corps de charrue (9) situé en troisième position dans la direction de déplacement de travail de la charrue brabant (1) présente une force de serrage plus élevée que le générateur de force de serrage du corps de charrue (1) situé en dernière position dans la direction de déplacement de travail.

3. Charrue brabant (1) selon les revendications 1 ou 2, **caractérisée en ce que** le générateur de force de serrage servant d'élément de protection contre les surcharges pour le corps de charrue (9) situé en quatrième position dans la direction de déplacement de travail présente une force de serrage plus élevée que le générateur de force de serrage du corps de charrue (9) situé en dernière position dans la direction de déplacement de travail.

4. Charrue brabant (1) selon l'une des revendications 1 à 3, **caractérisée en ce que** les générateurs de force de serrage des corps de charrue sont configurés comme ressorts de compression.

5. Charrue brabant (1) selon l'une des revendications 1 à 3, **caractérisée en ce que** les générateurs de force de serrage servant d'éléments de protection contre les surcharges sont configurés comme ressorts de traction.

6. Charrue brabant (1) selon l'une des revendications 1 à 3, **caractérisée en ce que** les générateurs de force de serrage des corps de charrue (9) sont configurés comme vérins hydrauliques (11).
